# FASCICULE DE BREVET EUROPEEN

(11) **EP 3 702 661 B1**
(45) Date de publication et mention de la délivrance du brevet: **04.05.2022**
(21) Numéro de dépôt: 20155060.5
(22) Date de dépôt: 03.02.2020
(51) Int. Cl.: F17C 5/06

(54) **PROCÉDÉ ET DISPOSITIF DE REMPLISSAGE DE RÉSERVOIRS AVEC DU GAZ SOUS PRESSION**
VERFAHREN UND VORRICHTUNG ZUM FÜLLEN VON TANKS MIT UNTER UNTER DRUCK STEHENDEM GAS
METHOD AND DEVICE FOR FILLING PRESSURISED GAS TANKS

(30) Priorité: 26.02.2019 FR 1901943
(43) Date de publication de la demande: 02.09.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Francois, Thibaut, 38360 Sassenage (FR)
(74) Mandataire: Air Liquide

(56) Documents cités:
- WO-A1-2011/049466
- DE-A1-102012 021 692
- DE-A1-102012 023 329
- FR-A1- 3 033 866
- FR-A1- 3 033 867
- US-A1- 2016 010 799

## Description

L'invention concerne un procédé et un dispositif de remplissage de réservoirs avec du gaz sous pression.

Un tel dispositif est connu de FR 3 033 867 A1.

L'invention concerne plus particulièrement un procédé de remplissage de réservoirs avec du gaz sous pression, notamment de l'hydrogène sous pression, via une station de remplissage comprenant au moins une source de gaz sous pression et un circuit fluidique de transfert du gaz depuis la au moins une source vers les réservoirs, le circuit comprenant une première extrémité reliée à la au moins une source de gaz et une seconde extrémité munie d'une conduite de transfert destinée à être raccordée de façon amovible au(x) réservoirs à remplir, le circuit comprenant disposés entre la première extrémité et la seconde extrémité, une première vanne d'isolation, un organe de régulation de débit ou de pression, et une seconde vanne d'isolation, le procédé comprenant le remplissage successif d'un premier réservoir puis d'un second réservoir, le procédé comprenant, entre le remplissage du premier réservoir et le remplissage du second réservoir, un test d'étanchéité du second réservoir raccordé de façon étanche à la seconde extrémité du circuit, le test de fuite comprenant une mise sous pression du second réservoir via l'ouverture de la seconde vanne, à la fin du remplissage du premier réservoir, les première et seconde vannes d'isolation étant fermées pour emprisonner une réserve de gaz sous pression dans le circuit entre ces deux vannes.

L'invention s'applique avantageusement au remplissage rapide (quelques minutes) de réservoirs d'hydrogène sous pression (entre 200 et 1000 bar par exemple). L'invention s'applique notamment au remplissage de réservoirs de carburant de véhicules.

Certaines normes (notamment la norme SAEJ2601) imposent de réaliser un test d'étanchéité du réservoir avant son remplissage. Ce test de fuite consiste à mettre sous pression le réservoir à remplir (raccordé de façon étanche au circuit de remplissage) et à mesurer une ou des pressions pour détecter une fuite entre le réservoir, son circuit (sa panoplie), le pistolet de la station, le flexible et le distributeur (dispenser en anglais).

Cette solution cependant peut être inefficace dans certaines situations.

Une méthode connue consiste à utiliser un stockage de pression source pour réaliser ce test de fuite. Cette méthode peut cependant provoquer des pics de pression (quantité de gaz transféré par unité de temps) trop importants.

Le document EP3271637 décrit l'utilisation du gaz emprisonné lors du précédent remplissage pour réaliser le test de fuite. Le document WO2011/049466A1 décrit également l'utilisation d'un volume de gaz disponible dans une conduite pour un remplissage. Ces solutions sont cependant inefficaces dans certaines situations. En effet, si le gaz emprisonné dans le circuit est à une pression inférieure à la pression régnant au réservoir à remplir il peut y avoir un test de fuite non efficace (pas d'ouverture des clapets appropriés) et/ou un mauvais remplissage dû à une mauvaise évaluation de la pression initiale dans le réservoir à remplir.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce qu'il comprend une mesure de la pression de la réserve de gaz emprisonné dans le circuit entre ces deux vannes et, lorsque cette pression mesurée est supérieure à un seuil déterminé, le test de fuite du second réservoir est réalisé avec la réserve de gaz via l'ouverture de la seconde vanne et, lorsque cette pression mesurée est inférieure au seuil déterminé, le procédé comprend une étape de remplissage du circuit entre les deux vannes avec la source de gaz via une ouverture de la première vanne, une étape de fermeture de la première vanne lorsque cette pression mesurée dans le circuit entre ces deux vannes atteint ou excède le seuil déterminé, le test de fuite du second réservoir étant ensuite réalisé avec la réserve de gaz via l'ouverture de la seconde vanne.

Ainsi, le test de fuite est réalisé uniquement avec le volume de gaz de la portion de circuit et en s'assurant qu'il y a une pression suffisante. Ceci permet à la fois d'éviter une pic de pression trop important ou un mauvais fonctionnement en cas de pression insuffisante pour réaliser ce test.

Par ailleurs, des modes de réalisation de l'invention peuvent comporter l'une ou plusieurs des caractéristiques suivantes :
- le seuil déterminé est compris entre 300 bar et 900 bar et notamment entre 700 et 860 bar,
- le seuil déterminé est une valeur de pression supérieure à la pression régnant dans le second réservoir avant son remplissage,
- la source comprend au moins un réservoir de stockage de gaz sous pression, l'étape de remplissage du circuit entre les deux vannes étant réalisée par équilibrage de pression avec ledit réservoir,
- au moins entre les première et seconde vannes d'isolation, le circuit comprend une ou des conduites comprenant une isolation thermique,
- le circuit comprend, entre la première vanne d'isolation et la seconde vanne, d'isolation un échangeur de chaleur de refroidissement du gaz transféré vers le réservoir à remplir,
- la première vanne d'isolation est disposée dans le circuit de façon adjacente à l'échangeur de chaleur, c'est-à-dire que la première vanne d'isolation est plus proche de l'échangeur de chaleur que de la première extrémité du circuit et de préférence la première vanne d'isolation est située au niveau de l'entrée de l'échangeur,
- la seconde vanne d'isolation est disposée dans le circuit de façon adjacente à la seconde extrémité du circuit, c'est-à-dire que la seconde vanne d'isolation est plus proche de la seconde extrémité du circuit que de l'échangeur de chaleur,
- le volume du circuit situé entre les premières et seconde vannes d'isolation est compris entre 0, 00005m³ et 0,01m³
- la longueur du circuit entre les première et seconde vannes d'isolation est comprise entre un mètre et cinquante mètres et de préférence comprise entre deux et trente mètres,

L'invention concerne également un dispositif de remplissage de réservoirs avec du gaz sous pression, notamment de l'hydrogène sous pression, comprenant une station de remplissage comprenant au moins une source de gaz sous pression et un circuit fluidique de transfert du gaz depuis la au moins une source vers les réservoirs, le circuit comprenant une première extrémité reliée à la au moins une source de gaz et une seconde extrémité munie d'une conduite de transfert destinée à être raccordée de façon amovible aux réservoirs à remplir, le circuit comprenant disposés entre la première extrémité et la seconde extrémité, une première vanne d'isolation, un organe de régulation de débit ou de pression, et une seconde vanne d'isolation, la station étant apte et configurée pour réaliser le remplissage successif d'un premier réservoir puis d'un second réservoir, la station comprenant un organe électronique de stockage et de traitement de données pour contrôler les remplissages et notamment pour contrôler les vannes, l'organe électronique de stockage et de traitement de données étant configuré pour réaliser, entre le remplissage du premier réservoir et le remplissage du second réservoir, un test d'étanchéité du second réservoir raccordé de façon étanche à la seconde extrémité du circuit, le test de fuite comprenant une mise sous pression du second réservoir via l'ouverture de la seconde vanne, à la fin du remplissage du premier réservoir, l'organe électronique de stockage et de traitement de données étant configuré pour fermer les première et seconde vannes d'isolation pour emprisonner une réserve de gaz sous pression dans le circuit entre ces deux vannes, le dispositif comprenant un capteur de pression dans le circuit entre ces deux vannes, l'organe électronique de stockage et de traitement de données étant configuré pour réaliser le test de fuite du second réservoir avec la réserve de gaz via l'ouverture de la seconde vanne lorsque la pression de la réserve de gaz emprisonnée dans le circuit entre ces deux vannes est supérieure à un seuil déterminé, et, lorsque cette pression mesurée est inférieure au seuil déterminé, pour ouvrir la première vanne afin de remplir le circuit entre les deux vannes avec la source de jusqu'à atteindre ou excéder le seuil déterminé, puis ensuite refermer la première vanne et ouvrir la seconde vanne pour réaliser le test de fuite du second réservoir avec la réserve de gaz remplie.

Selon une particularité possible : le circuit comprend, entre la première vanne d'isolation et la seconde vanne, d'isolation, un échangeur de chaleur de refroidissement du gaz transféré vers le réservoir à remplir.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

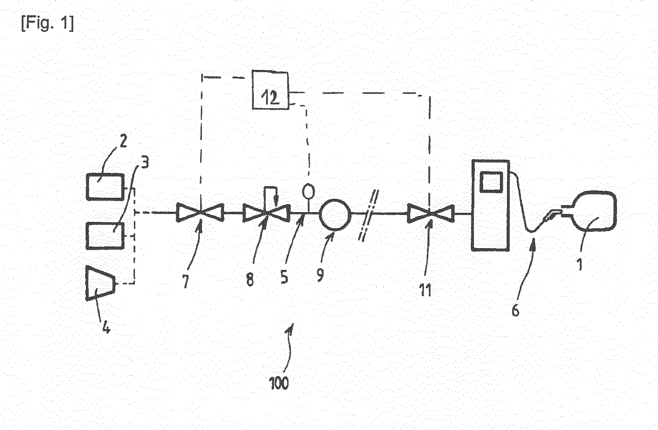

[Fig. 1] représente de façon schématique et partielle, un exemple de station de remplissage de gaz pouvant mettre en œuvre l'invention.

La station 100 de remplissage illustrée schématiquement comprend au moins une source 2, 3, 4 de gaz sous pression et un circuit 5 fluidique de transfert du gaz depuis la au moins une source vers les réservoirs 1 à remplir.

La au moins une source 2, 3, 4 peut comprendre par exemple au moins l'un parmi : un stockage de gaz sous pression ou des stockages sous pression disposés en parallèle, un ou plusieurs compresseurs...La station 100 peut notamment utiliser plusieurs réservoirs sous pression pour réaliser un remplissage par des équilibrages de pression successifs (« en cascade ») avec le réservoir 1 à remplir (éventuellement complété ou assisté par un compresseur).

On pourra se référer par exemple aux documents FR2928716A1 et WO2015001208A2 qui décrivent plus en détail des exemples de structure et de fonctionnement de stations de remplissage.

Le circuit 5 comprend au moins une première extrémité reliée à au moins une source 2, 3, 4 de gaz (côté amont) et une seconde extrémité (côté aval) munie d'une conduite 6 de transfert, notamment un flexible, destinée à être raccordée de façon amovible aux réservoirs 1 à remplir.

Le circuit 5 comprend, de préférence disposés en série d'amont en aval, entre la première extrémité et la seconde extrémité : une première vanne 7 d'isolation, un organe 8 de régulation de débit ou de pression (détendeur, vanne de régulation de débit, détendeur piloté, vanne de type proportionnelle ou tout autre organe approprié), un échangeur 9 de chaleur de refroidissement du gaz transféré vers le réservoir 1 à remplir et une seconde vanne 11 d'isolation.

L'échangeur 9 (qui est facultatif) est un organe dans lequel le gaz est refroidi à la température cible. Bien entendu, l'agencement de plusieurs échangeurs ayant différentes structures permettant de réaliser ce refroidissement peut être envisagé.

Après l'organe 9 de refroidissement et la seconde vanne 11 d'isolement, l'extrémité aval du circuit peut comporter de façon connue des capteurs, flexibles et connectiques pour se raccorder aux réservoirs 1 des véhicules à remplir.

La représentation schématique de la [Fig. 1] décrit un minimum de composants. Bien entendu, le circuit 5 peut comporter classiquement d'autres équipements tels que des vannes, capteurs... intercalés ou non entre les composants illustrés à la figure. De même l'ordre des composants peut être modifié. Par exemple, la première vanne 7 d'isolement peut être située entre l'organe 8 de régulation et l'échangeur 9 voire même en aval de l'échangeur 9.

La station peut être utilisée comme suit.

Lors d'un remplissage du réservoir 1 d'un premier véhicule, dit « premier réservoir », la fin du processus de remplissage du réservoir 1 se déroule généralement aux alentours de la pression maximale de remplissage (entre 700 bar et 875 bar par exemple) avec une température de refroidissement dans les gammes recommandées (par exemple entre -17°C et -40°C). Une fois le premier réservoir 1 complètement remplit, la station 100 de remplissage peut commander la fermeture des vannes 7, 11 d'isolement de la ligne de distribution.

L'organe 9 de refroidissement est mis de préférence dans un mode prédéfini de régime d'attente du véhicule suivant. C'est-à-dire qu'un circuit de refroidissement fournissant des frigories à l'échangeur 9 peut être mis à l'arrêt ou maintenu avec un régime maximal de refroidissement ou avec un régime de refroidissement réduit par rapport à son refroidissement maximal.

De cette façon, dans la phase d'attente du véhicule suivant, l'ensemble de la ligne ou des lignes du circuit 5 située(s) entre les deux vannes 7, 11 d'isolation reste en pression et éventuellement à une température refroidie.

C'est-à-dire qu'une réserve de gaz sous pression et froid est emprisonnée dans le circuit 5 aux conditions des derniers instants (ou secondes) du remplissage (fin de remplissage). Ainsi, lorsque le véhicule suivant se présente la ligne du circuit 5 est maintenue froide (à l'exception des pertes thermiques). Le remplissage du réservoir 1 de ce second véhicule (« second réservoir » 1) peut être réalisé.

Des tests préliminaires classiques (préalables au remplissage d'après la recommandation du document SAE J2601 ou conformes à toute autre logique de remplissage ou norme de remplissage propre à chaque opérateur d'une station de remplissage) peuvent être réalisés avec le gaz emprisonné. Notamment, le gaz est utilisé pour réaliser des tests d'étanchéité classiques en pression suffisante (et également avec une température froide).

Ceci permet ainsi de démarrer le remplissage du réservoir suivant avec un gaz emprisonné dans le circuit 5. Ce gaz déjà sous pression peut avantageusement être déjà refroidi. De cette façon, une partie non négligeable des lignes du circuit 5 est ainsi déjà pré-refroidie.

Ceci permet d'éviter ou de limiter le temps de mise en route du système de refroidissement et la phase préliminaire, où l'échange entre le gaz à refroidir et l'échangeur n'est pas encore stabilisé.

Ceci permet également de limiter les dispositifs qui permettent de préparer du gaz pré-refroidi avant le remplissage, comme par exemple le maintien du système de refroidissement à plein régime ou la présence d'une boucle de pré-refroidissement en fonctionnement permanent.

Dans le cas par exemple d'un remplissage d'un premier réservoir 1 qui se termine au bout d'une durée comprise entre 3min et 5min. A l'issue de ce remplissage, les vannes 7, 11 d'isolation sont fermées.

L'extrémité aval de ligne de distribution (flexible notamment) connectée au véhicule peut être vidée de son gaz (en aval de la seconde vanne 11 d'isolement).

En revanche, entre les deux vannes 7, 11 d'isolement la longueur du circuit peut être comprise typiquement entre deux mètres et trente mètres. Cette portion est ainsi remplie d'hydrogène par exemple à une pression comprise entre 700 bar et 875 bar et un une température pouvant typiquement être entre -40°C et -17°C. Cette ligne est de préférence calorifugée. Cette isolation thermique est adaptée pour limiter au maximum les déperditions thermiques et peut permettre de maximiser et de prolonger les effets de l'invention.

Après un temps d'attente typiquement d'ordre de une à vingt minutes, le gaz peut s'être légèrement réchauffé, mais reste dans une gamme de température froide (-40°C à -17°C par exemple). Un second véhicule peut se présenter à la station 100. L'utilisateur peut réaliser les opérations de connexion et d'authentification de son véhicule. Le remplissage est ensuite lancé par exemple via l'appui sur un bouton ou un indicateur de début.

La première étape de remplissage comprenant par exemple un test de fuite, et/ou une détermination des caractéristiques du réservoir et des conditions de la ligne de remplissage peut être réalisé avec le gaz contenu entre les vannes 7, 11 d'isolement (notamment via l'ouverture de la seconde vanne 11).

Après ou pendant l'utilisation du gaz emprisonné, le processus de remplissage du second réservoir 11 peut se poursuivre avec le gaz sous pression

En particulier, la station réalise un test d'étanchéité du second réservoir 1 raccordé de façon étanche à la seconde extrémité du circuit avec le gaz emprisonné dans le circuit entre les deux vannes7, 11.

Ainsi, à la fin du remplissage du premier réservoir 1, les première 7 et seconde 11 vannes d'isolation sont fermées pour emprisonner une réserve de gaz sous pression dans le circuit 5 entre ces deux vannes 7, 11.

Une mesure de la pression de la réserve de gaz emprisonnée dans le circuit 5 entre ces deux vannes 7, 11 peut être réalisée. Cette mesure de pression peut être réalisée via un ou plusieurs capteurs 13 de pression dans le circuit et/ou via une estimation ou tout autre moyen. En effet, cette pression de gaz emprisonnée est généralement sensiblement égale à la pression en fin de remplissage du réservoir précédent (notamment en cas de remplissage par équilibrage de pression ou « cascade »). Cette pression est par exemple la pression du réservoir 1 en fin de remplissage et/ou la pression de la source en fin de remplissage. Lorsque cette pression mesurée est supérieure à un seuil déterminé, le test de fuite du second réservoir 1 est réalisé avec la réserve de gaz via l'ouverture de la seconde vanne 11 la première vanne 7 restant fermée).

En revanche, lorsque cette pression mesurée est inférieure au seuil déterminé, la station réalise au préalable une étape de remplissage (ou de montée en pression) du circuit entre les deux vannes 7, 11 avec une source 2, 3, 4 de gaz via une ouverture de la première vanne 7 (l'autre vanne 11 restant fermée). Ce remplissage peut être réalisé par exemple par équilibrage de pression avec un réservoir 2 source à haute pression.

Lorsque ce remplissage ou montée en pression est suffisante (lorsque cette pression dans le circuit 5 entre ces deux vannes 7, 11 atteint ou excède le seuil déterminé) la première vanne 7 peut être fermée. Le test de fuite du second réservoir 1 peut ensuite être réalisé avec la réserve de gaz via l'ouverture de la seconde vanne 11 (première vanne 7 restant fermée).

Le seuil déterminé de pression peut être une valeur fixe comprise entre 300 bar et 900bar et notamment entre 700 et 860 bar.

De même, ce seuil déterminé peut être une valeur de pression variable qui est choisie pour être supérieure à la pression dans le second réservoir 1 avant remplissage de ce dernier.

Ainsi, même si le remplissage du premier réservoir 1 a été partiel (pression de fin de remplissage de 300 bar par exemple) et que le second réservoir à remplir arrive avec une pression déjà plus élevée (par exemple 400 bar), le processus ci-dessus permet de s'assurer que le test de fuite sera possible et satisfaisant.

Ainsi, selon cette solution, la source (réservoir 2 à haute pression notamment) n'est pas directement reliée au réservoir 1 à remplir pour le test de fuite. Ceci permet d'éviter les pics de pressions trop importants et aussi d'éviter les pics de débits (qui sont notamment limités par la norme SAEJ2601).

De plus, la solution ci-dessus permet de garantir une pression suffisante dans le circuit pour un test de fuite efficace et en toute sécurité.

## Revendications

1. Procédé de remplissage de réservoirs (1) avec du gaz sous pression, notamment de l'hydrogène sous pression, via une station (100) de remplissage comprenant au moins une source (2, 3, 4) de gaz sous pression et un circuit (5) fluidique de transfert du gaz depuis la au moins une source vers les réservoirs (1), le circuit (5) comprenant une première extrémité reliée à la au moins une source (2, 3, 4) de gaz et une seconde extrémité munie d'une conduite (6) de transfert destinée à être raccordée de façon amovible au(x) réservoirs (1) à remplir, le circuit (5) comprenant disposés entre la première extrémité et la seconde extrémité, une première vanne (7) d'isolation, un organe (8) de régulation de débit ou de pression, et une seconde vanne (11) d'isolation, le procédé comprenant le remplissage successif d'un premier réservoir (1) puis d'un second réservoir (1), le procédé comprenant, entre le remplissage du premier réservoir (1) et le remplissage du second réservoir (1), un test d'étanchéité du second réservoir (1) raccordé de façon étanche à la seconde extrémité du circuit, le test de fuite comprenant une mise sous pression du second réservoir (1) via l'ouverture de la seconde vanne (11), à la fin du remplissage du premier réservoir (1), les première (7) et seconde (11) vannes d'isolation étant fermées pour emprisonner une réserve de gaz sous pression dans le circuit (5) entre ces deux vannes (7, 11), **caractérisé en ce qu'**il comprend une mesure de la pression de la réserve de gaz emprisonné dans le circuit (5) entre ces deux vannes (7, 11) et, lorsque cette pression mesurée est supérieure à un seuil déterminé, le test de fuite du second réservoir (1) est réalisé avec la réserve de gaz via l'ouverture de la seconde vanne (11) et, lorsque cette pression mesurée est inférieure au seuil déterminé, le procédé comprend une étape de remplissage du circuit entre les deux vannes (7, 11) avec la source (2, 3, 4) de gaz via une ouverture de la première vanne (7), une étape de fermeture de la première vanne (7), et, lorsque cette pression mesurée dans le circuit (5) entre ces deux vannes (7, 11) atteint ou excède le seuil déterminé, le test de fuite du second réservoir (1) est ensuite réalisé avec la réserve de gaz via l'ouverture de la seconde vanne (11).

2. Procédé selon la revendication 1, **caractérisé en ce que** le seuil déterminé est compris entre 300 bar et 900 bar et notamment entre 700 et 860 bar.

3. Procédé selon la revendication 1 ou 2, **caractérisé en ce que** le seuil déterminé est une valeur de pression supérieure à la pression régnant dans le second réservoir (1) avant son remplissage.

4. Procédé selon l'une quelconque des revendications 1 à 3, **caractérisé en ce que** la source comprend au moins un réservoir (2) de stockage de gaz sous pression et **en ce que** l'étape de remplissage du circuit entre les deux vannes (7, 11) est réalisée par équilibrage de pression avec ledit réservoir (2).

5. Procédé selon l'une quelconque des revendications 1 à 4, **caractérisé en ce qu'**au moins entre les première (7) et seconde (11) vannes d'isolation, le circuit (5) comprend une ou des conduites comprenant une isolation thermique.

6. Procédé selon l'une quelconque des revendications 1 à 5, **caractérisé en ce que** le circuit (5) comprend, entre la première vanne (7) d'isolation et la seconde vanne (11), d'isolation un échangeur (9) de chaleur de refroidissement du gaz transféré vers le réservoir (1) à remplir.

7. Procédé selon la revendication 6, **caractérisé en ce que** la première vanne (7) d'isolation est disposée dans le circuit (5) de façon adjacente à l'échangeur (9) de chaleur, c'est-à-dire que la première vanne (7) d'isolation est plus proche de l'échangeur (9) de chaleur que de la première extrémité du circuit (5) et de préférence la première vanne (7) d'isolation est située au niveau de l'entrée de l'échangeur (9).

8. Procédé selon la revendication 6 ou 7, **caractérisé en ce que** la seconde vanne (11) d'isolation est disposée dans le circuit (5) de façon adjacente à la seconde extrémité du circuit (5), c'est-à-dire que la seconde vanne (11) d'isolation est plus proche de la seconde extrémité du circuit (5) que de l'échangeur (9) de chaleur.

9. Procédé selon l'une quelconque des revendications 1 à 8, **caractérisé en ce que** le volume du circuit situé entre les premières (7) et seconde (11) vannes d'isolation est compris entre 0, 00005m³ et 0,01m³.

10. Procédé selon l'une quelconque des revendications 1 à 9, **caractérisé en ce que** la longueur du circuit (5) entre les première (7) et seconde (11) vannes d'isolation est comprise entre un mètre et cinquante mètres et de préférence comprise entre deux et trente mètres.

11. Dispositif de remplissage de réservoirs (1) avec du gaz sous pression, notamment de l'hydrogène sous pression, comprenant une station (100) de remplissage comprenant au moins une source (2, 3, 4) de gaz sous pression et un circuit (5) fluidique de transfert du gaz depuis la au moins une source vers les réservoirs (1), le circuit (5) comprenant une première extrémité reliée à la au moins une source (2, 3, 4) de gaz et une seconde extrémité munie d'une conduite (6) de transfert destinée à être raccordée de façon amovible aux réservoirs (1) à remplir, le circuit (5) comprenant disposés entre la première extrémité et la seconde extrémité, une première vanne (7) d'isolation, un organe (8) de régulation de débit ou de pression, et une seconde vanne (11) d'isolation, la station (100) étant apte et configurée pour réaliser le remplissage successif d'un premier réservoir (1) puis d'un second réservoir (1), la station comprenant un organe (12) électronique de stockage et de traitement de données pour contrôler les remplissages et notamment pour contrôler les vannes (7, 11), l'organe (12) électronique de stockage et de traitement de données étant configuré pour réaliser, entre le remplissage du premier réservoir (1) et le remplissage du second réservoir (1), un test d'étanchéité du second réservoir (1) raccordé de façon étanche à la seconde extrémité du circuit, le test de fuite comprenant une mise sous pression du second réservoir (1) via l'ouverture de la seconde vanne (11), à la fin du remplissage du premier réservoir (1), l'organe (12) électronique de stockage et de traitement de données étant configuré pour fermer les première (7) et seconde (11) vannes d'isolation pour emprisonner une réserve de gaz sous pression dans le circuit (5) entre ces deux vannes (7, 11), le dispositif comprenant un capteur (13) de pression dans le circuit (5) entre ces deux vannes (7, 11), l'organe (12) électronique de stockage et de traitement de données étant configuré pour réaliser le test de fuite du second réservoir (1) avec la réserve de gaz via l'ouverture de la seconde vanne (11) lorsque la pression de la réserve de gaz emprisonnée dans le circuit (5) entre ces deux vannes (7, 11) est supérieure à un seuil déterminé, et, lorsque cette pression mesurée est inférieure au seuil déterminé, pour ouvrir la première vanne (7) afin de remplir le circuit entre les deux vannes (7, 11) avec la source (2, 3, 4) de gaz jusqu'à atteindre ou excéder le seuil déterminé, puis ensuite refermer la première vanne (7) et ouvrir la seconde vanne (11) pour réaliser le test de fuite du second réservoir (1) avec la réserve de gaz remplie.

12. Dispositif selon la revendication 11, **caractérisé en ce que** le circuit (5) comprend, entre la première vanne (7) d'isolation et la seconde vanne (11), d'isolation, un échangeur (9) de chaleur de refroidissement du gaz transféré vers le réservoir (1) à remplir.

## Patentansprüche

1. Verfahren zum Füllen von Behältern (1) mit unter Druck stehendem Gas, insbesondere Druckwasserstoff, über eine Füllstation (100), die mindestens eine Quelle von unter Druck stehendem Gas (2, 3, 4) und einen Fluidkreislauf (5) zur Übertragung von Gas von der mindestens einen Quelle zu den Behältern (1) enthält, wobei der Kreislauf (5) ein erstes Ende, das mit der mindestens einen Gasquelle (2, 3, 4) verbunden ist, und ein zweites Ende enthält, das mit einer Übertragungsleitung (6) versehen ist, die dazu bestimmt ist, lösbar an den(die) zu füllenden Behälter (1) angeschlossen zu werden, wobei der Kreislauf (5) zwischen dem ersten Ende und dem zweiten Ende angeordnet ein erstes Absperrventil (7), ein Durchsatz- oder Druckregelorgan (8) und ein zweites Absperrventil (11) enthält, wobei das Verfahren das aufeinanderfolgende Füllen eines ersten Behälters (1) und dann eines zweiten Behälters (1) enthält, wobei das Verfahren zwischen dem Füllen des ersten Behälters (1) und dem Füllen des zweiten Behälters (1) einen Dichtheitstest des zweiten Behälters (1) enthält, der dicht an das zweite Ende des Kreislaufs angeschlossen ist, wobei der Lecktest ein Unterdrucksetzen des zweiten Behälters (1) über das Öffnen des zweiten Ventils (11) am Ende des Füllens des ersten Behälters (1) enthält, wobei das erste (7) und das zweite (11) Absperrventil geschlossen sind, um einen Vorrat von unter Druck stehendem Gas im Kreislauf (5) zwischen diesen zwei Ventilen (7, 11) einzuschließen, **dadurch gekennzeichnet, dass** es eine Messung des Drucks des im Kreislauf (5) zwischen diesen zwei Ventilen (7, 11) eingeschlossenen Gasvorrats enthält, und wenn dieser gemessene Druck höher ist als eine bestimmte Schwelle, der Lecktest des zweiten Behälters (1) mit dem Gasvorrat über das Öffnen des zweiten Ventils (11) durchgeführt wird, und wenn dieser gemessene Druck niedriger ist als die bestimmte Schwelle, das Verfahren einen Schritt des Füllens des Kreislaufs zwischen den zwei Ventilen (7, 11) mit der Gasquelle (2, 3, 4) über ein Öffnen des ersten Ventils (7), einen Schritt des Schließens des ersten Ventils (7) enthält, und wenn dieser gemessene Druck im Kreislauf (5) zwischen diesen zwei Ventilen (7, 11) die bestimmte Schwelle erreicht oder überschreitet, der Lecktest des zweiten Behälters (1) anschließend mit dem Gasvorrat über das Öffnen des zweiten Ventils (11) durchgeführt wird.

2. Verfahren nach Anspruch 1, **dadurch gekennzeichnet, dass** die bestimmte Schwelle zwischen 300 Bar und 900 Bar und insbesondere zwischen 700 und 860 Bar liegt.

3. Verfahren nach Anspruch 1 oder 2, **dadurch gekennzeichnet, dass** die bestimmte Schwelle ein Druckwert höher als der im zweiten Behälter (1) vor seinem Füllen herrschende Druck ist.

4. Verfahren nach einem der Ansprüche 1 bis 3, **dadurch gekennzeichnet, dass** die Quelle mindestens einen Speicherbehälter von unter Druck stehendem Gas (2) enthält, und dass der Füllschritt des Kreislaufs zwischen den zwei Ventilen (7, 11) durch Druckausgleich mit dem Behälter (2) durchgeführt wird.

5. Verfahren nach einem der Ansprüche 1 bis 4, **dadurch gekennzeichnet, dass** mindestens zwischen dem ersten (7) und dem zweiten (11) Absperrventil der Kreislauf (5) eine Leitung oder Leitungen enthält, die eine Wärmedämmung enthalten.

6. Verfahren nach einem der Ansprüche 1 bis 5, **dadurch gekennzeichnet, dass** der Kreislauf (5) zwischen dem ersten Absperrventil (7) und dem zweiten Absperrventil (11) einen Wärmetauscher (9) zur Kühlung des zum zu füllenden Behälter (1) übertragenen Gases enthält.

7. Verfahren nach Anspruch 6, **dadurch gekennzeichnet, dass** das erste Absperrventil (7) im Kreislauf (5) dem Wärmetauscher (9) benachbart angeordnet ist, d.h., dass das erste Absperrventil (7) dem Wärmetauscher (9) näher ist als dem ersten Ende des Kreislaufs (5), und vorzugsweise das erste Absperrventil (7) sich im Bereich des Eingangs des Tauschers (9) befindet.

8. Verfahren nach Anspruch 6 oder 7, **dadurch gekennzeichnet, dass** das zweite Absperrventil (11) im Kreislauf (5) dem zweiten Ende des Kreislaufs (5) benachbart angeordnet ist, d.h., dass das zweite Absperrventil (11) dem zweiten Ende des Kreislaufs (5) näher ist als dem Wärmetauscher (9).

9. Verfahren nach einem der Ansprüche 1 bis 8, **dadurch gekennzeichnet, dass** das Volumen des Kreislaufs, das sich zwischen dem ersten (7) und dem zweiten (11) Absperrventil befindet, zwischen 0,00005 m³ und 0,01 m³ liegt.

10. Verfahren nach einem der Ansprüche 1 bis 9, **dadurch gekennzeichnet, dass** die Länge des Kreislaufs (5) zwischen dem ersten (7) und dem zweiten (11) Absperrventil zwischen einem Meter und fünfzig Metern und vorzugsweise zwischen zwei und dreißig Metern liegt.

11. Vorrichtung zum Füllen von Behältern (1) mit unter Druck stehendem Gas, insbesondere Druckwasserstoff, die eine Füllstation (100) enthält, die mindestens eine Quelle (2, 3, 4) von unter Druck stehendem Gas und einen Fluidkreislauf (5) zur Übertragung von Gas von der mindestens einen Quelle zu den Behältern (1) enthält, wobei der Kreislauf (5) ein erstes Ende, das mit der mindestens einen Gasquelle (2, 3, 4) verbunden ist, und ein zweites Ende enthält, das mit einer Übertragungsleitung (6) versehen ist, die dazu bestimmt ist, lösbar an den(die) zu füllenden Behälter (1) angeschlossen zu werden, wobei der Kreislauf (5) zwischen dem ersten Ende und dem zweiten Ende angeordnet ein erstes Absperrventil (7), ein Durchsatz- oder Druckregelorgan (8) und ein zweites Absperrventil (11) enthält, wobei die Station (100) geeignet und konfiguriert ist, das aufeinanderfolgende Füllen eines ersten Behälters (1) und dann eines zweiten Behälters (1) durchzuführen, wobei die Station ein elektronisches Organ (12) zum Speichern und zur Verarbeitung von Daten enthält, um die Füllungen zu kontrollieren und insbesondere um die Ventile (7, 11) zu kontrollieren, wobei das elektronische Organ (12) zum Speichern und zur Verarbeitung von Daten konfiguriert ist, zwischen dem Füllen des ersten Behälters (1) und dem Füllen des zweiten Behälters (1) einen Dichtheitstest des zweiten Behälters (1) durchzuführen, der dicht an das zweite Ende des Kreislaufs angeschlossen ist, wobei der Lecktest ein Unterdrucksetzen des zweiten Behälters (1) über das Öffnen des zweiten Ventils (11) am Ende des Füllens des ersten Behälters (1) enthält, wobei das elektronische Organ (12) zum Speichern und zur Verarbeitung von Daten konfiguriert ist, das erste (7) und das zweite (11) Absperrventil zu schließen, um einen Vorrat von unter Druck stehendem Gas im Kreislauf (5) zwischen diesen zwei Ventilen (7, 11) einzuschließen, wobei die Vorrichtung einen Drucksensor (13) im Kreislauf (5) zwischen diesen zwei Ventilen (7, 11) enthält, wobei das elektronische Organ (12) zum Speichern und zur Verarbeitung von Daten konfiguriert ist, den Lecktest des zweiten Behälters (1) mit dem Gasvorrat über das Öffnen des zweiten Ventils (11) durchzuführen, wenn der Druck des im Kreislauf (5) zwischen diesen zwei Ventilen (7, 11) eingeschlossenen Gasvorrats höher ist als eine bestimmte Schwelle, und wenn dieser gemessene Druck niedriger ist als die bestimmte Schwelle, das erste Ventil (7) zu öffnen, um den Kreislauf zwischen den zwei Ventilen (7, 11) mit der Gasquelle (2, 3, 4) zu füllen, bis die bestimmte Schwelle erreicht oder überschritten ist, dann anschließend das erste Ventil (7) zu schließen und das zweite Ventil (11) zu öffnen, um den Lecktest des zweiten Behälters (1) mit dem gefüllten Gasvorrat durchzuführen.

12. Vorrichtung nach Anspruch 11, **dadurch gekennzeichnet, dass** der Kreislauf (5) zwischen dem ersten Absperrventil (7) und dem zweiten Absperrventil (11) einen Wärmetauscher (9) zur Kühlung des zum zu füllenden Behälter (1) übertragenen Gases enthält.

## Claims

1. Process for filling tanks (1) with pressurized gas, in particular pressurized hydrogen, via a filling station (100) comprising at least one source (2, 3, 4) of pressurized gas and a fluid circuit (5) for the transfer of the gas from the at least one source to the tanks (1), the circuit (5) comprising a first end connected to the at least one gas source (2, 3, 4) and a second end provided with a transfer pipe (6) intended to be joined in removable fashion to the tanks (1) to be filled, the circuit (5) comprising, positioned between the first end and the second end, a first isolation valve (7), a member (8) for regulation of flow rate or pressure, and a second isolation valve (11), the process comprising the successive filling of a first tank (1) and then of a second tank (1), the process comprising, between the filling of the first tank (1) and the filling of the second tank (1), a leaktightness test on the second tank (1) joined in leaktight fashion to the second end of the circuit, the leak test comprising placing the second tank (1) under pressure via the opening of the second valve (11), at the end of the filling of the first tank (1), the first (7) and second (11) isolation valves being closed in order to trap a supply of pressurized gas in the circuit (5) between these two valves (7, 11), **characterized in that** it comprises a measurement of the pressure of the supply of gas trapped in the circuit (5) between these two valves (7, 11) and, when this measured pressure is greater than a predetermined threshold, the leak test on the second tank (1) is carried out with the gas supply via the opening of the second valve (11) and, when this measured pressure is lower than the predetermined threshold, the process comprises a stage of filling the circuit between the two valves (7, 11) with the gas source (2, 3, 4) via an opening of the first valve (7), a stage of closing of the first valve (7), and, when this measured pressure in the circuit (5) between these two valves (7, 11) reaches or exceeds the predetermined threshold, the leak test on the second tank (1) is subsequently carried out with the gas supply via the opening of the second valve (11).

2. Process according to Claim 1, **characterized in that** the predetermined threshold is between 300 bar and 900 bar and in particular between 700 and 860 bar.

3. Process according to Claim 1 or 2, **characterized in that** the predetermined threshold is a pressure value greater than the pressure prevailing in the second tank (1) before it is filled.

4. Process according to any one of Claims 1 to 3, **characterized in that** the source comprises at least one pressurized gas storage tank (2) and **in that** the stage of filling the circuit between the two valves (7, 11) is carried out by pressure balancing with the said tank (2).

5. Process according to any one of Claims 1 to 4, **characterized in that** at least between the first (7) and second (11) isolation valves, the circuit (5) comprises one or more pipes comprising thermal insulation.

6. Process according to any one of Claims 1 to 5, **characterized in that** the circuit (5) comprises, between the first isolation valve (7) and the second isolation valve (11), a heat exchanger (9) for cooling the gas transferred to the tank (1) to be filled,

7. Process according to Claim 6, **characterized in that** the first isolation valve (7) is positioned in the circuit (5) in a way adjacent to the heat exchanger (9), that is to say that the first isolation valve (7) is closer to the heat exchanger (9) than to the first end of the circuit (5) and preferably the first isolation valve (7) is located at the inlet of the exchanger (9).

8. Process according to Claim 6 or 7, **characterized in that** the second isolation valve (11) is positioned in the circuit (5) in a way adjacent to the second end of the circuit (5), that is to say that the second isolation valve (11) is closer to the second end of the circuit (5) than to the heat exchanger (9).

9. Process according to any one of Claims 1 to 8, **characterized in that** the volume of the circuit located between the first (7) and second (11) isolation valves is between 0.00005 m³ and 0.01 m³.

10. Process according to any one of Claims 1 to 9, **characterized in that** the length of the circuit (5) between the first (7) and second (11) isolation valves is between one metre and fifty metres and preferably between two and thirty metres.

11. Device for filling tanks (1) with pressurized gas, in particular pressurized hydrogen, comprising a filling station (100) comprising at least one source (2, 3, 4) of pressurized gas and a fluid circuit (5) for the transfer of the gas from the at least one source to the tanks (1), the circuit (5) comprising a first end connected to the at least one gas source (2, 3, 4) and a second end provided with a transfer pipe (6) intended to be joined in removable fashion to the tanks (1) to be filled, the circuit (5) comprising, positioned between the first end and the second end, a first isolation valve (7), a member (8) for regulation of flow rate or pressure, and a second isolation valve (11), the station (100) being suitable and configured for carrying out the successive filling of a first tank (1) and then of a second tank (1), the station comprising an electronic data processing and storage member (12) in order to control the fillings and in particular in order to control the valves (7, 11), the electronic data processing and storage member (12) being configured in order to carry out, between the filling of the first tank (1) and the filling of the second tank (1), a leaktightness test on the second tank (1) joined in leaktight fashion to the second end of the circuit, the leak test comprising placing the second tank (1) under pressure via the opening of the second valve (11), at the end of the filling of the first tank (1), the electronic data processing and storage member (12) being configured in order to close the first (7) and second (11) isolation valves in order to trap a supply of pressurized gas in the circuit (5) between these two valves (7, 11), the device comprising a pressure sensor (13) in the circuit (5) between these two valves (7, 11), the electronic data processing and storage member (12) being configured in order to carry out the leak test on the second tank (1) with the gas supply via the opening of the second valve (11) when the pressure of the gas supply trapped in the circuit (5) between these two valves (7, 11) is greater than a predetermined threshold, and, when this measured pressure is lower than the predetermined threshold, in order to open the first valve (7) in order to fill the circuit between the two valves (7, 11) with the gas source (2, 3, 4) until the predetermined threshold is reached or exceeded, then subsequently to close the first valve (7) and open the second valve (11) in order to carry out the leak test on the second tank (1) with the filled gas supply.

12. Device according to Claim 11, **characterized in that** the circuit (5) comprises, between the first isolation valve (7) and the second isolation valve (11), a heat exchanger (9) for cooling the gas transferred to the tank (1) to be filled.
